# EUROPEAN PATENT SPECIFICATION

(11) **EP 2 475 207 B1**
(45) Date of publication and mention of the grant of the patent: **10.10.2018**
(21) Application number: 10813327.3
(22) Date of filing: 25.08.2010
(51) Int. Cl.: H04W 8/02

(54) **DETECTING ABNORMAL UMTS TERMINAL**
ERKENNUNG VON ABORMALE UMTS-ENDGERÄTEN
DÉTECTION DE TERMINALS UMTS ANORMALS

(30) Priority: 03.09.2009 CN 200910172910
(43) Date of publication of application: 11.07.2012
(73) Proprietor: ZTE Corporation, Shenzhen, Guangdong 518057 (CN)
(72) Inventor: ZHAN, Zhiguo, Shenzhen Guangdong 518057 (CN); LI, Yang, Shenzhen Guangdong 518057 (CN); DAI, Bin, Shenzhen Guangdong 518057 (CN)
(74) Representative: Novagraaf Technologies
(86) International application number: PCT/CN2010/076351
(87) International publication number: WO 2011/026405

(56) References cited:
- WO-A1-2005/032183
- CN-A- 1 231 108
- CN-A- 101 378 596
- CN-A- 101 453 784
- CN-A- 101 646 195
- US-A1- 2006 274 703

## Description

### Field of the Invention

The present invention relates to communication technical field, and in particular to a method and an apparatus for detecting a Universal Mobile Telecommunications System (UMTS) terminal.

### Background of the Invention

In the early days of Universal Mobile Telecommunications System (UMTS) network construction, many problems exist in the terminal and the network therefore user experience is affected. The problems of the UMTS terminal are particularly prominent, for example, since mobile phones of a certain brand have found problems in some production batch, the following situations will be caused after the mobile phones in this batch access the network:
the terminal can initiate the operations such as location update, Packet Data Protocol (PDP) activation and the like frequently, so that the quality of the network is reduced dramatically;
the delays of the operations such as cell reselection, handover and the like are overlong, therefore the call is dropped or the Internet is dropped and user experience is affected; and
the network connection success rate is low or the Internet surfing speed is very low, so that the Internet surfing experience of the users is influenced.
In the method for detecting an abnormal terminal in the conventional art, a specific certain abnormal terminal cannot be located, so that the users and operators cannot dispose the abnormal terminal effectively in time.

Patent applications WO 2005/032183, US 2006/274703 and CN 1231108 provide respective technical solutions; however, the above mentioned problem still remains unsolved.

### Summary of the Invention

The present invention provides a method and an apparatus for detecting a UMTS terminal, which detecting an abnormal situation of the UMTS terminal to achieve the analysis of the terminal and to locate a problem precisely, as defined in claims 1 and 5.

In order to achieve the above-mentioned object, the technical solution of the present invention is realized in the following way.

According to the invention, the method for detecting the UMTS terminal comprises:
composing a Transaction Detail Record(TDR) of a Radio Access Network Application Part (RANAP) at a Packet Switch (PS) domain interface and a Circuit Switch (CS) domain interface;
acquiring an International Mobile Subscriber Identity (IMSI) and an International Mobile Equipment Identity (IMEI) from the TDR, and establish the corresponding relation between the IMSI and the IMEI;
analyzing and obtain operation information of terminal corresponding to each IMEI according to the TDR, and determine the IMEI of an abnormal terminal according to the operation information obtained by analyzing; and
determining an IMSI code used by the abnormal terminal according to the corresponding relation between the IMEI and the IMSI.

According to the invention, the operation information comprises at least one of an overclock operation, a super-long delay operation or an operation success rate.

The process of analyzing and obtaining the operation information of terminal corresponding to each IMEI according to the TDR comprises at least one of the following steps of:
counting the operation times of each event of any terminal according to the TDR, and determining that the terminal has performed the overclock operation when the operation times of at least one event exceed a preset threshold;
counting the operation delay of each event of the terminal according to the TDR, and determining that the terminal has performed the super-long delay operation when the delay of at least one event exceeds a preset threshold; and
counting the operation success rate of each event of the terminal according to the TDR, and determining that the operation success rate of the terminal is low when the operation success rate of at least one event is lower than a preset threshold.

The process of acquiring the IMSI and the IMEI comprises:
acquiring the IMSI from a Permanent Non-Access Stratum (NAS) User Equipment (UE) Identity field of a command identification (ID) message; and
acquiring the IMEI from an identity request and an identity response.

The identity request is sent to a user terminal by the core network in the process of a Connection Management (CM) service request, or a location updating request, or an attach request; and a field identification type is an IMEI code.

After determining the IMSI code used by the abnormal terminal, the method further comprises: notifying the user to download a patch by sending a Wireless Application Protocol (WAP) connection.

According to the inventuion, the apparatus for detecting the UMTS terminal comprises:
an information acquisition unit, configured to compose a TDR of the RANAP at a PS domain interface and a CS domain interface;
a determination unit, configured to acquire an IMSI and an IMEI from the TDR, establish a corresponding relation between the IMSI and the IMEI, analyze and obtain operation information of terminal corresponding to each IMEI according to the TDR, and determine the IMEI of an abnormal terminal according to the operation information; and
an information feedback unit, configured to determine an IMSI code used by the abnormal terminal according to the corresponding relation between the IMEI and the IMSI.

Also according to the invention, the operation information comprises at least one of an overclock operation, a super-long delay operation or an operation success rate; then when analyzing and obtaining the operation information of terminal corresponding to each IMEI according to the TDR, the determination unit is configured to perform at least one of the following steps of:
counting the operation times of each event of any terminal according to the TDR, and determining that the terminal has performed the overclock operation when the operation times of at least one event exceed a preset threshold;
counting the operation delay of each event of the terminal according to the TDR, and determining that the terminal has performed the super-long delay operation when the delay of at least one event exceeds a preset threshold; and
counting the operation success rate of each event of the terminal according to the TDR, and determining that the operation success rate of the terminal is low when the operation success rate of at least one event is lower than a preset threshold.

When acquiring the IMSI and the IMEI, the determination unit is configured to acquire the IMSI from a Permanent NAS UE Identity field of the common ID message; and acquire the IMEI from an identity request and an identity response.

The information feedback unit is further configured to notify the user to download a patch by a WAP connection.

The method and the apparatus provided by the embodiment of the present invention aim at analyzing for the terminal to locate the problem precisely, and the present detection method acquires signalling message data from signalling links of the packet switch domain interface IuPs and the circuit switch domain interface IuCs by a signalling acquisition mode, further more collates, analyzes and counts the signalling message data, so by which the detailed information of the terminal can be understood in detail. The focus of the detection method is to analyze the signalling message of the interface luPs and interface luCs, and obtain the related information of the concerned terminal by utilizing the analysis results.

### Brief Description of the Drawings

Fig. 1 is a flowchart of the method for detecting the UMTS terminal according to one embodiment of the present invention;
Fig. 2 is a schematic diagram illustrating the application environment of the method for detecting the UMTS terminal according to one embodiment of the present invention; and
Fig. 3 is a structural diagram of the apparatus for detecting the UMTS terminal according to one embodiment of the present invention.

### Detailed Description of the Embodiments

One embodiment of the present invention provides the method for detecting the UMTS terminal, comprising the steps of: composing the TDR of the RANAP at a PS domain interface and a CS domain interface; acquiring the IMSI and the IMEI from the TDR, and establishing the corresponding relation between the IMSI and the IMEI; analyzing and obtaining operation information of terminal corresponding to each IMEI according to the TDR, and determining the IMEI of an abnormal terminal according to the operation information; and determining the IMSI code used by the abnormal terminal according to the corresponding relation between the IMEI and the IMSI, and notifying the user who uses the abnormal terminal to replace the terminal or to patch.

A detailed description is given to each specific embodiment of the embodiments of the present invention with reference to the accompanying drawings.

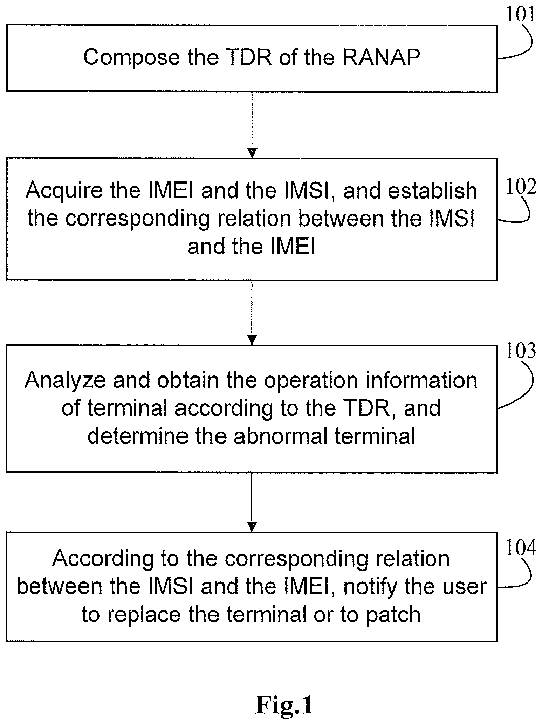

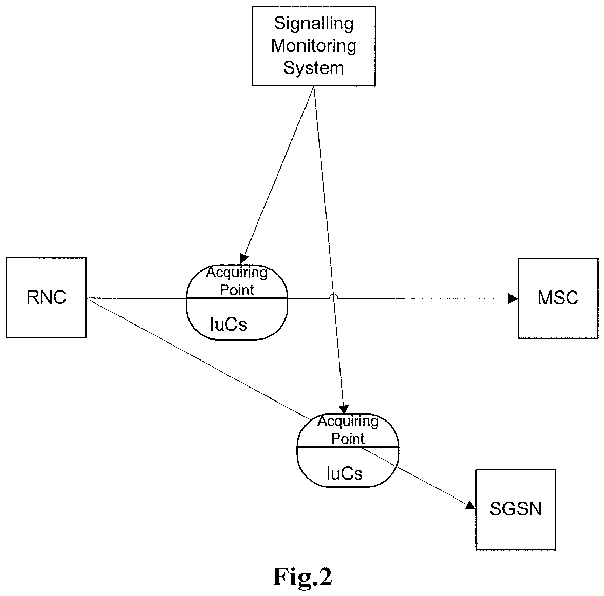

As shown in Fig. 1 and Fig. 2, the method for detecting the UMTS terminal is provided according to one embodiment of the present invention, which specifically comprises the following steps.

Step 101, the Transaction Detail Record (TDR) of the RANAP is composed at the interface luPs and the interface IuCs.

Step 102, an International Mobile Subscriber Identity (IMSI) and an International Mobile Equipment Identity (IMEI) are acquired from the TDR, and the corresponding relation between the IMSI and the IMEI is established, wherein one specific implementation comprises the following steps that:
A, acquire the International Mobile Subscriber Identity (IMSI) code from a Permanent NAS UE Identity field of the common ID message.
B, acquire the International Mobile Equipment Identity (IMEI) code from the identity request and the identity response.
   Not every call or Internet surfing process has an Identity process. In order to ensure that every call or Internet surfing process has the Identity process in the method provided by the embodiment of the present invention, master equipment (the core network) sends the identity request to the User Equipment (UE) in the process of the CM service request, the location updating request or the attach request; and the type of the field identity type 2 is an IMEI code.
C, establish the corresponding relation between the IMSI and the IMEI.

Step 103, analyze and obtain the operation information of the terminals corresponding to each IMEI according to the TDR, and determine the IMEI of the abnormal terminal according to the operation information.

Further, after determining the IMEI of the abnormal terminal, output the model number of the abnormal terminal according the corresponding relation between the IMEI and the terminal model number. The corresponding relation between the IMEI and the terminal model number can be queried by surfing at present, but it is not that precise; and if an accurate corresponding relation is desired, it needs to be acquired from the Ministry of Industry and Information Technology.

Step 104, determine the IMSI code used by the abnormal terminal according to the corresponding relation between the IMEI and the IMSI, and notify the user using the abnormal terminal of the related information about the abnormal terminal through the IMSI code, wherein the user may be informed to replace the terminal or to patch.

After determining the IMSI code used by the abnormal terminal, the method further comprises the process of notifying the user to download the patch by sending a WAP connection.

In the above step, the operation information in Step 103 comprises at least one of the overclock operation, the super-long delay operation or the operation success rate. The method for counting and analyzing the information according to the IMEI comprises:
A. overclock operation:
counting the times of the terminal performing the following events by taking a certain terminal as a unit, and presetting threshold times of performing every event. If the operation times of a certain event exceed the threshold value, then determining that the terminal has performed the overclock operation, wherein the specific analyzed events are as shown in Table 1:

**Table 1**

| | | |
|---|---|---|
| IuCs | location updating | |
| | 2G3G switching analysis | |
| | 3G switching analysis | |
| IuPs | attach analysis | secondary PDP activation analysis |
| | routing area updating analysis | modifying PDP analysis |
| | relocation analysis | separation analysis |
| | PDP activation analysis | service request analysis |

B. super-long delay operation analysis:
taking a certain terminal (namely a certain IMEI) as a unit, counting the delay of the following events according to the TDR and presetting the delay threshold value for each event. If the delay of any event exceeds the delay threshold value, determining that the terminal has performed the super-long delay operation, wherein the events to be analyzed are as shown in Table 2:

**Table 2**

| | |
|---|---|
| IuCs | 2G3G switching analysis |
| | 3G switching analysis |
| IuPs | attach analysis |
| | routing area updating analysis |
| | relocation analysis |
| | authentication analysis |
| | PDP activation analysis |
| | secondary PDP activation analysis |
| | modifying PDP analysis |
| | RAB assignment analysis |
| | service request analysis |
| | identification analysis |

C, event success rate analysis:
analyzing the success rate of each operation event, presetting the threshold value of the success rate of each event, if the success rate of a certain event is lower than the threshold value, then determining the success rate of the terminal operation is comparatively low, wherein the specific analyzed operation events are as shown in Table 3:

**Table 3**

| IuCs | IuPs | |
|---|---|---|
| location updating 2G3G switching | attach analysis routing area updating | secondary PDP activation analysis |
| analysis 3G switching analysis | analysis | modifying PDP analysis |
| | relocation analysis | RAB assignment analysis |
| | authentication analysis | service request analysis |
| | PDP activation analysis | identification analysis |

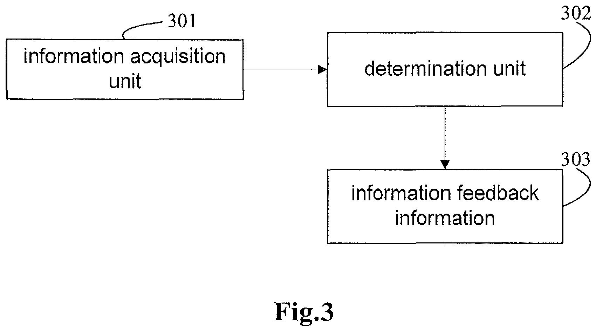

As shown in Fig. 3, according to the method, the embodiment of the present invention also provides an apparatus for detecting the UMTS terminal, comprising the information acquisition unit 301, the determination unit 302 and the information feedback unit 303.

The information acquisition unit 301 is configured to compose the TDR of the RANAP at packet domain interfaces luPs and circuit domain interfaces luCs.

The determination unit 302 is configured to acquire the IMSI and the IMEI from the TDR, and to establish the corresponding relation between the IMSI and the IMEI, analyze and obtain operation information of terminal corresponding to each IMEI according to the TDR, and determine the IMEI of an abnormal terminal according to the operation information.

The information feedback unit 303 is configured to determine the IMSI code used by the abnormal terminal according to the corresponding relation between the IMEI and the IMSI, and notify the user using the abnormal terminal to replace the terminal or to patch.

The information feedback unit is also configured to notify the user to download the patch by sending the WAP connection.

In the above step, the operation information in the determination unit 302 comprises at least one of the overclock operation, the super-long delay operation or the operation success rate; and the determination unit 302 is also configured to:
count the times of each operation event of any terminal according to the TDR, and determine that the terminal has performed the overclock operation if the operation times of at least one event exceed a preset threshold,
wherein the operation events to be analyzed comprise:
   the location updating analysis, the 2G3G switching analysis and the 3G switching analysis of the interface luCs; and
   the attach analysis, the routing area updating analysis, the relocation analysis, the PDP activation analysis, the secondary PDP activation analysis, the modifying PDP analysis, the separation analysis and the service request analysis collected by the interface luPs;
   count the delay of each operation event of the terminal according to the TDR, and determine that the terminal has performed the super-long delay operation if the delay of at least one event exceeds a preset threshold,
   wherein the operation events to be analyzed comprise:
   the 2G3G switching analysis and the 3G switching analysis of the interface luCs; and
   the attach analysis, the routing area updating analysis, the relocation analysis, the authentication analysis, the PDP activation analysis, the secondary PDP activation analysis, the modifying PDP analysis, the RAB assignment analysis and the service request analysis and the identification analysis of the interface luPs; and
   count the success rate of each operation event of the terminal according to the TDR, and determine that the operation success rate of the terminal is low if the success rate of at least one event is lower than a preset threshold,
   wherein the operation events to be analyzed comprises:
      the location updating, the 2G3G switching analysis and the 3G switching analysis of the interface luCs; and
      the attach analysis, the routing area updating analysis, the relocation analysis, the authentication analysis, the PDP activation analysis, the secondary PDP activation analysis, the modifying PDP analysis, the RAB assignment analysis, the service request analysis and the identification analysis of the interface luPs.

Further, the determination unit 302 is also configured to acquire the IMSI from the permanent NAS UE identity field of the common ID message; and acquire the IMEI from an identity request and an identity response.

The problem that analysis and location according to the terminal does not exist in the conventional art is solved by the present invention by the way of monitoring and analyzing the UMTS terminal through interface IuPs and interface IuCs.

In order to analyze the terminal and locate the problem precisely, the present method for detecting acquires signalling message data from signalling links of the packet switch domain interface luPs and the circuit switch domain interface luCs by a signalling acquisition mode, and further collates, analyzes and counts the signalling message data, so that the detailed information of the terminal can be understood in detail. The focus of the method for detecting is to analyze the signalling message of the interface luPs and interface luCs, and to obtain the related information of the concerned terminal by utilizing the analysis results.

Reliable means is provided for terminal behaviour analysis, and fills the blank in the field.

## Claims

1. A method for detecting a Universal Mobile Telecommunications System, UMTS, terminal, **characterized by** comprising:
composing a Transaction Detail Record, TDR, of a Radio Access Network Application Part, RANAP, at a Packet Switch, PS, domain interface and at a Circuit Switch, CS, domain interface;
acquiring an International Mobile Subscriber Identity, IMSI, and an International Mobile Equipment Identity, IMEI, from the TDR, and establishing a corresponding relation between the IMSI and the IMEI;
analyzing and obtaining operation information of terminal corresponding to each IMEI according to the TDR, and determining the IMEI of an abnormal terminal according to the operation information obtained by analyzing; and
determining an IMSI code used by the abnormal terminal according to the corresponding relation between the IMEI and the IMSI;
wherein the operation information comprises at least one of an overclock operation, a super-long delay operation and an operation success rate;
wherein the process of analyzing and obtaining the operation information of terminal corresponding to each IMEI according to the TDR comprises at least one of the following steps of:
counting the operation times of each event of any terminal according to the TDR, and determining that the terminal has performed the overclock operation when the operation times of at least one event exceed a preset threshold;
counting the operation delay of each event of the terminal according to the TDR, and determining that the terminal has performed the super-long delay operation when the delay of at least one event exceeds a preset threshold; and
counting the operation success rate of each event of the terminal according to the TDR, and determining that the operation success rate of the terminal is low when the operation success rate of at least one event is lower than a preset threshold.

2. The method according to claim 1, **characterized in that** the process of acquiring the IMSI and the IMEI comprises:
acquiring the IMSI from a Permanent Non-Access Stratum, NAS, User Equipment, UE, Identity field of a command identification, ID, message; and
acquiring the IMEI from an identity request and an identity response.

3. The method according to claim 2, **characterized in that** the identity request is sent to a user terminal by the core network in the process of a Connection Management, CM, service request, or a location updating request, or an attach request; and a field identification type is an IMEI code.

4. The method according to any one of claims 1 to 3, **characterized in that** after determining the IMSI code used by the abnormal terminal, the method further comprises: notifying the user to download a patch by sending a Wireless Application Protocol, WAP, connection.

5. An apparatus for detecting the UMTS terminal, **characterized by** comprising:
an information acquisition unit (301), configured to compose a TDR of the RANAP at a PS domain interface and at a CS domain interface;
a determination unit (302), configured to acquire an IMSI and an IMEI from the TDR, establish a corresponding relation between the IMSI and the IMEI, analyze and obtain operation information of terminal corresponding to each IMEI according to the TDR, and determine the IMEI of an abnormal terminal according to the operation information; and
an information feedback unit (303), configured to determine an IMSI code used by the abnormal terminal according to the corresponding relation between the IMEI and the IMSI;
wherein the operation information comprises at least one of an overclock operation, a super-long delay operation and an operation success rate; then when analyzing and obtaining the operation information of terminal corresponding to each IMEI according to the TDR, the determination unit is configured to perform at least one of the following steps of:
counting the operation times of each event of any terminal according to the TDR, and determining that the terminal has performed the overclock operation when the operation times of at least one event exceed a preset threshold;
counting the operation delay of each event of the terminal according to the TDR, and determining that the terminal has performed the super-long delay operation when the delay of at least one event exceeds a preset threshold; and
counting the operation success rate of each event of the terminal according to the TDR, and determining that the operation success rate of the terminal is low when the operation success rate of at least one event is lower than a preset threshold.

6. The apparatus according to claim 5, **characterized in that** when acquiring the IMSI and the IMEI, the determination unit is configured to acquire the IMSI from a Permanent NAS UE Identity field of a common ID message; and acquire the IMEI from an identity request and an identity response.

7. The apparatus according to any one of claims 5 to 6, **characterized in that** the information feedback unit is further configured to notify the user to download a patch by a WAP connection.

## Patentansprüche

1. Verfahren zum Erkennen eines Universal Mobile Telecommunications System-, UMTS, Endgeräts, **dadurch gekennzeichnet, dass** es umfasst:
Zusammenstellen eines Transaction Detail Record, TDR, eines Radio Access Network Application Part, RANAP, an einer Packet Switch, PS, Domain-Schnittstelle und an einer Circuit Switch, CS, Domain-Schnittstelle;
Beziehen einer International Mobile Subscriber Identity, IMSI, und einer International Mobile Equipment Identity, IMEI, aus dem TDR, und Ermitteln einer entsprechenden Beziehung zwischen der IMSI und der IMEI;
Analysieren und Erhalten von Endgeräte-Betriebsinformationen, die jeder IMEI entsprechen, gemäß dem TDR, und Bestimmen der IMEI eines abnormen Endgeräts gemäß den durch Analysieren erhaltenen Betriebsinformationen; und
Bestimmen eines IMSI-Codes, der von dem abnormen Endgerät verwendet wird, gemäß der entsprechenden Beziehung zwischen der IMEI und der IMSI;
wobei die Betriebsinformationen mindestens eines aus einem Übertaktbetrieb, einem Betrieb mit superlanger Verzögerung und einer Betriebserfolgsrate umfassen;
wobei der Prozess des Analysierens und Erhaltens der Endgeräte-Betriebsinformationen, die jeder IMEI entsprechen, gemäß dem TDR mindestens einen der folgenden Schritte umfasst des:
Zählens der Betriebszeiten jedes Ereignisses eines Endgeräts gemäß dem TDR, und Bestimmens, dass das Endgerät den Übertaktbetrieb durchgeführt hat, wenn die Betriebszeiten von mindestens einem Ereignis eine voreingestellte Schwelle übersteigen;
Zählens der Betriebsverzögerung jedes Ereignisses des Endgeräts gemäß dem TDR, und Bestimmens, dass das Endgerät den Betrieb mit superlanger Verzögerung durchgeführt hat, wenn die Verzögerung von mindestens einem Ereignis eine voreingestellte Schwelle übersteigt; und
Zählens der Betriebserfolgsrate jedes Ereignisses des Endgeräts gemäß dem TDR, und Bestimmens, dass die Betriebserfolgsrate des Endgeräts niedrig ist, wenn die Betriebserfolgsrate von mindestens einem Ereignis niedriger ist als eine voreingestellte Schwelle.

2. Verfahren nach Anspruch 1, **dadurch gekennzeichnet, dass** der Prozess des Beziehens der IMSI und der IMEI umfasst:
Beziehen der IMSI aus einem Permanent Non-Access Stratum-, NAS, User Equipment-, UE, Identity-Feld einer Befehlsidentifikations-, ID, Nachricht; und
Beziehen der IMEI aus einer Identitätsanfrage und einer Identitätsantwort.

3. Verfahren nach Anspruch 2, **dadurch gekennzeichnet, dass** die Identitätsanfrage im Prozess einer Connection Management-, CM, Dienstanfrage, oder einer Positionsaktualisierungsanfrage, oder einer Anfügeanfrage vom Kernnetzwerk an ein Anwenderendgerät gesendet wird; und ein Feldidentifikationstyp ein IMEI-Code ist.

4. Verfahren nach einem der Ansprüche 1 bis 3, **dadurch gekennzeichnet, dass** nach Bestimmen des IMSI-Codes, der von dem abnormen Endgerät verwendet wird, das Verfahren weiter umfasst: Benachrichtigen des Anwenders darüber, einen Patch herunterzuladen, durch Senden einer Wireless Application Protocol-, WAP, Verbindung.

5. Vorrichtung zum Erkennen des UMTS-Endgeräts, **dadurch gekennzeichnet, dass** sie umfasst:
eine Informationsbezugseinheit (301), die dazu konfiguriert ist, einen TDR der RANAP an einer PS Domain-Schnittstelle und an einer CS Domain-Schnittstelle zusammenzustellen;
eine Bestimmungseinheit (302), die dazu konfiguriert ist, eine IMSI und eine IMEI aus dem TDR zu beziehen, eine entsprechende Beziehung zwischen der IMSI und der IMEI zu ermitteln, Endgeräte-Betriebsinformationen, die jeder IMEI entsprechen, gemäß dem TDR zu analysieren und zu erhalten, und die IMEI eines abnormen Endgeräts gemäß den Betriebsinformationen zu bestimmen; und
eine Informationsrückmeldeeinheit (303), die dazu konfiguriert ist, einen IMSI-Code, der von dem abnormen Endgerät verwendet wird, gemäß der entsprechenden Beziehung zwischen der IMEI und der IMSI zu bestimmen;
wobei die Betriebsinformationen mindestens eines aus einem Übertaktbetrieb, einem Betrieb mit superlanger Verzögerung und einer Betriebserfolgsrate umfassen; dann beim Analysieren und Erhalten der Endgeräte-Betriebsinformationen, die jeder IMEI entsprechen, gemäß dem TDR die Bestimmungseinheit dazu konfiguriert ist, mindestens einen der folgenden Schritten durchzuführen des:
Zählens der Betriebszeiten jedes Ereignisses eines Endgeräts gemäß dem TDR, und Bestimmens, dass das Endgerät den Übertaktbetrieb durchgeführt hat, wenn die Betriebszeiten von mindestens einem Ereignis eine voreingestellte Schwelle übersteigen;
Zählens der Betriebsverzögerung jedes Ereignisses des Endgeräts gemäß dem TDR, und Bestimmens, dass das Endgerät den Betrieb mit superlanger Verzögerung durchgeführt hat, wenn die Verzögerung von mindestens einem Ereignis eine voreingestellte Schwelle übersteigt; und
Zählens der Betriebserfolgsrate jedes Ereignisses des Endgeräts gemäß dem TDR, und Bestimmens, dass die Betriebserfolgsrate des Endgeräts niedrig ist, wenn die Betriebserfolgsrate von mindestens einem Ereignis niedriger ist als eine voreingestellte Schwelle.

6. Vorrichtung nach Anspruch 5, **dadurch gekennzeichnet, dass** beim Beziehen der IMSI und der IMEI die Bestimmungseinheit dazu konfiguriert ist, die IMSI aus einem Permanent NAS UE Identity-Field einer gemeinsamen ID-Nachricht zu beziehen; und die IMEI aus einer Identitätsanfrage und einer Identitätsantwort zu beziehen.

7. Vorrichtung nach einem der Ansprüche 5 bis 6, **dadurch gekennzeichnet, dass** die Informationenrückmeldeeinheit weiter dazu konfiguriert ist, den Anwender über eine WAP-Verbindung darüber zu benachrichtigen, einen Patch herunterzuladen.

## Revendications

1. Procédé de détection d'un terminal de système universel de télécommunication avec les mobiles, UMTS, **caractérisé en ce qu'**il comprend :
la composition d'un enregistrement de détail de transaction, TDR, d'une partie d'application de réseau d'accès radio, RANAP, au niveau d'une interface de domaine à commutation de paquets, PS, et au niveau d'une interface de domaine à commutation de circuits, CS ;
l'acquisition d'une identité internationale d'abonné mobile, IMSI, et d'une identité internationale d'équipement mobile, IMEI, à partir du TDR, et l'établissement d'une relation correspondante entre l'IMSI et l'IMEI ;
l'analyse et l'obtention d'informations de fonctionnement de terminal correspondant à chaque IMEI selon le TDR, et la détermination de l'IMEI d'un terminal anormal selon les informations de fonctionnement obtenues par analyse ; et
la détermination d'un code d'IMSI utilisé par le terminal anormal selon la relation correspondante entre l'IMEI et l'IMSI ;
dans lequel les informations de fonctionnement comprennent au moins un parmi un fonctionnement avec horloge surcadencée, un fonctionnement avec un retard très long et un taux de réussite de fonctionnement ;
dans lequel le processus d'analyse et d'obtention des informations de fonctionnement de terminal correspondant à chaque IMEI selon le TDR comprend au moins une des étapes suivantes consistant à :
compter les temps de fonctionnement de chaque événement d'un terminal quelconque selon le TDR et déterminer que le terminal a réalisé le fonctionnement avec horloge surcadencée lorsque les temps de fonctionnement d'au moins un événement excèdent un seuil prédéfini ;
compter le retard de fonctionnement de chaque événement du terminal selon le TDR et déterminer que le terminal a réalisé un fonctionnement avec un retard très long lorsque le retard d'au moins un événement excède un seuil prédéfini ; et
compter le taux de réussite de fonctionnement de chaque événement du terminal selon le TDR et déterminer que le taux de réussite de fonctionnement du terminal est bas lorsque le taux de réussite de fonctionnement d'au moins un événement est plus bas qu'un seuil prédéfini.

2. Procédé selon la revendication 1, **caractérisé en ce que** le processus d'acquisition de l'IMSI et de l'IMEI comprend :
l'acquisition de l'IMSI à partir d'un champ d'identité d'équipement d'utilisateur, UE, de couche de non-accès, NAS, permanent d'un message d'identification, ID, de commande ; et
l'acquisition de l'IMEI à partir d'une demande d'identité et d'une réponse d'identité.

3. Procédé selon la revendication 2, **caractérisé en ce que** la demande d'identité est envoyée à un terminal d'utilisateur par le réseau fédérateur dans le processus d'une demande de service de gestion de connexion, CM, ou d'une demande de mise à jour d'emplacement, ou d'une demande de rattachement ; et un type d'identification de champ est un code d'IMEI.

4. Procédé selon l'une quelconque des revendications 1 à 3, **caractérisé en ce que**, après la détermination du code d'IMSI utilisé par le terminal anormal, le procédé comprend en outre : la notification à l'utilisateur de télécharger un programme correctif par l'envoi d'une connexion de protocole d'application sans fil, WAP.

5. Appareil pour détecter le terminal UMTS, **caractérisé en ce qu'**il comprend :
une unité d'acquisition d'informations (301), configurée pour composer un TDR de la RANAP au niveau d'une interface de domaine PS et d'une interface de domaine CS ;
une unité de détermination (302), configurée pour acquérir une IMSI et une IMEI à partir du TDR, établir une relation correspondante entre l'IMSI et l'IMEI, analyser et obtenir des informations de fonctionnement de terminal correspondant à chaque IMEI selon le TDR, et déterminer l'IMEI d'un terminal anormal selon les informations de fonctionnement ; et
une unité de renvoi d'informations (303), configurée pour déterminer un code d'IMSI utilisé par le terminal anormal selon la relation correspondante entre l'IMEI et l'IMSI ;
dans lequel les informations de fonctionnement comprennent au moins un parmi un fonctionnement avec horloge surcadencée, un fonctionnement avec un retard très long et un taux de réussite de fonctionnement ; puis lors de l'analyse et de l'obtention des informations de fonctionnement de terminal correspondant à chaque IMEI selon le TDR, l'unité de détermination est configurée pour réaliser au moins une des étapes suivantes consistant à :
compter les temps de fonctionnement de chaque événement d'un terminal quelconque selon le TDR et déterminer que le terminal a réalisé un fonctionnement avec horloge surcadencée lorsque les temps de fonctionnement d'au moins un événement excèdent un seuil prédéfini ;
compter le retard de fonctionnement de chaque événement du terminal selon le TDR et déterminer que le terminal a réalisé un fonctionnement avec un retard très long lorsque le retard d'au moins un événement excède un seuil prédéfini ; et
compter le taux de réussite de fonctionnement de chaque événement du terminal selon le TDR et déterminer que le taux de réussite de fonctionnement du terminal est bas lorsque le taux de réussite de fonctionnement d'au moins un événement est plus bas qu'un seuil prédéfini.

6. Appareil selon la revendication 5, **caractérisé en ce que**, lors de l'acquisition de l'IMSI et de l'IMEI, l'unité de détermination est configurée pour acquérir l'IMSI d'un champ d'identité UE NAS permanent d'un message d'ID commun ; et acquérir l'IMEI à partir d'une demande d'identité et d'une réponse d'identité.

7. Appareil selon l'une quelconque des revendications précédentes 5 à 6, **caractérisé en ce que** l'unité de renvoi d'informations est en outre configurée pour notifier à l'utilisateur de télécharger un programme correctif par une connexion WAP.
